# EUROPEAN PATENT APPLICATION

(11) **EP 1 615 004 A1**
(43) Date of publication of application: **11.01.2006**
(21) Application number: 04076965.5
(22) Date of filing: 07.07.2004
(51) Int. Cl.: G01F 11/18, G01F 11/40, A47F 1/035, A47J 31/40

(54) **Powder measuring device**

(71) Applicant: Impress Group B.V., 7418 AH Deventer (NL)
(72) Inventor: Boogert, Robert Marcel, 7623 JG Borne (NL); Blaauw, Hendrikus Jozephus Anthonius, 7924 PW Veeningen (NL); Savrij Droste, Fred Willen, 7231 DG Warnsveld (NL)
(74) Representative: 't Jong, Bastiaan Jacob

(57) **Abstract**

The invention relates to powder measuring device comprising:
- a powder container;
- a nozzle for dispensing powder from the powder container into a container, such as a bottle or cup;
- valve means for controlling a flow of powder from the powder container to the nozzle;
- water heated dispensing system.

## Description

The invention relates to the field of measuring powder, and especially measuring powdered milk for baby food. Powdered milk is usually packaged in a bag or in a can and the user measures an amount of powder using a spoon. This measured powder is then brought over to a bottle or cup.

When using a spoon for bringing powdered milk from a can or bag into a bottle or cup, it is often difficult not to spill some powder. It is furthermore difficult to measure the exact amount of powder necessary to prepare baby milk.

It is an object of the invention to alleviate the above-mentioned disadvantages.

This object is achieved according to the invention with a powder measuring device comprising:
- a powder container;
- a nozzle for dispensing powder from the powder container into a container, such as a bottle or cup;
- valve means for controlling a flow of powder from the powder container to the nozzle.

A bottle or cup can be placed underneath the nozzle and by operating the valve means an amount of powder can be directly brought from the powder container into the bottle or cup.

In a preferred embodiment of the powder measuring device according to the invention, the powder container is a can comprising a bottom, a peripheral wall and a top, wherein either the bottom or the top comprises a connector for connecting the can to the valve means. The can is like a cartridge and can be inserted into the powder measuring device, with which the powder measuring device is filled with powder. When the powder container is emptied, the can is removed and another can is inserted.

In another preferred embodiment the side of the can comprising the connector is slanted towards the connector. This improves the emptying of the can, while the last amount of powder can slide along the slanted surface towards the connector. This reduces the amount of residu in the container, when it is fully emptied.

In another embodiment of the powder measuring device according to the invention the valve means comprise a chamber for containing a predetermined volume of powder. When the valve is opened, a predetermined amount of powder is discharged through the nozzle. This predetermined volume of powder can be the complete amount necessary for preparing the for example baby milk, or it can be a fixed unit.

In a preferred embodiment the volume of the chamber is adjustable. This is of advantage especially when the predetermined volume is the amount necessary for preparing a portion of baby milk. Depending on the age of the baby this amount varies and by adjusting the volume of the chamber the amount of powder discharge through the nozzle can be adjusted.

In yet another preferred embodiment according to the invention the powder measuring device comprises a water dispenser for dispensing water into the container, such as a bottle or a cup. Preferably the water dispenser comprises a heater for heating the water. So with this powder measuring device it is possible to prepare a portion of for example baby milk. In the case of a heater the prepared baby milk can directly be fed to the baby.

It is furthermore preferred that the water is dispensed simultaneously with the dispensing of the powder. This provides for a good mixing action between the water and powder and which reduces the presence of lumps in the mixture of water and powder.

In yet another embodiment of the powder measuring device according to the invention, the device comprises vibration means for vibrating the powder container. By vibrating the powder container the powder will be urged towards the discharge opening of the powder container and reduces the amount of residu in the container.

In still another preferred embodiment of the powder measuring device according to the invention the device comprises a weighing device for weighing the measured powder which is connected to the valve means. With the weighing device it is possible to check the amount, which is measured into the container, such as a bottle or cup. The weighing device can also be used to control the valve means such that substantially an exact amount of powder is measured, independent of the flow of the powder.

It is furthermore preferred with a powder measuring device according to the invention, that the device comprises stirring means for stirring the container, such as a bottle or cup. When the powder is measured into said container and water is added to this container, the stirring means can stir the powder and water to a mixture.

These and other advantages of the invention will be elucidated in conjunction with the accompanying drawings.

Figure 1 shows a perspective view of a can for use with a powder measuring device according to the invention.

Figure 2 shows a perspective view of an embodiment of a powder measuring device according to the invention.

Figure 3 shows a schematic cross-sectional view of the powder measuring device according to figure 2.

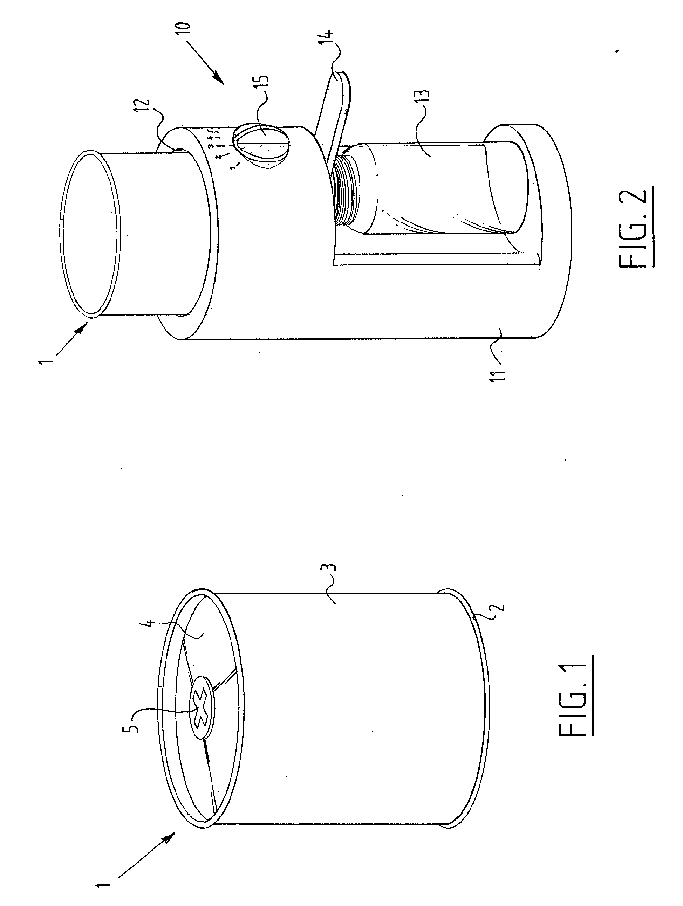

Figure 1 shows a can 1 for use with a powder measuring device according to the invention. This can 1 has a bottom 2, a peripheral wall 3 and a top 4. The top 4 comprises a connector 5 with which the can 1 can be connected to a powder measuring device according to the invention.

In figure 2 a powder measuring device 10 according to the invention is shown. This powder measuring device comprises a housing 11 with a recess 12 on top of the housing 11. In this recess a can 1 is inserted upside down.

At the side of the housing 11 a recess is provided in which a bottle 13 can be placed. The powder measuring device 10 further comprises a operating lever 14 with which valve means can be operated, such that powder from the can 1 is dispensed into the bottle 13.

Furthermore, the powder measuring device 10 comprises an adjusting dial 15 for adjusting the predetermined volume, which is dispensed by operating the lever 14.

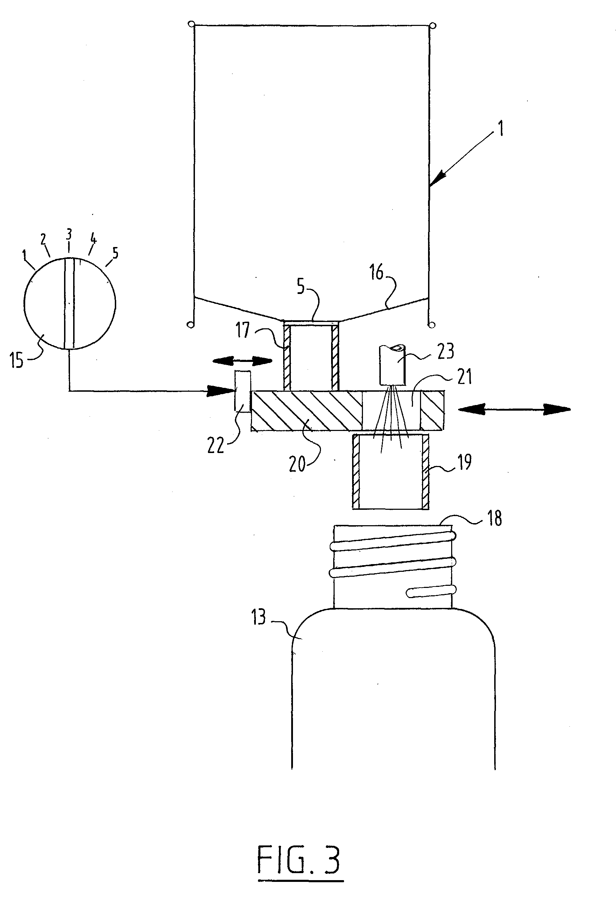

Figure 3 shows a schematic cross-sectional view of the powder measuring device 10 according to the invention. The can 1 is arranged upside down with the connector 5 facing downwards. The surface 16 in which the connector 5 is arranged is slanted, such that the powder will flow to the connector 5. The connector 5 is connected with a tube 17.

Above the opening 18 of the bottle 13, a nozzle 19 is arranged. Between the tube 17 and the nozzle 19 valve means 20 are arranged. These valve means 20 consist in this embodiment out of a shiftable element having a chamber 21 with a predetermined volume. An abutment 22 limits the stroke of the element 20. The abutment 22 can be adjusted by varying the adjustment dial 15.

The lever part 14 operates the valve means 20 and shifts the chamber 21 underneath the tube 17 and then transports the chamber 21, which is filled with powder to the nozzle 19 for discharge into the bottle 13. When the abutment 22 is adjusted such that the chamber 21 cannot be fully shifted underneath the tube 17, the amount of powder will be decreased. In this way it is possible to reduce the predetermined amount of powder.

## Claims

1. Powder measuring device comprising:
- a powder container;
- a nozzle for dispensing powder from the powder container into a container, such as a bottle or cup;
- valve means for controlling a flow of powder from the powder container to the nozzle.

2. Powder measuring device according to claim 1, wherein the powder container is a can comprising a bottom, a peripheral wall and a top, wherein either the bottom or the top comprises a connector for connecting the can to the valve means.

3. Powder measuring device according to claim 2, wherein the side of the can comprising the connector is slanted towards the connector.

4. Powder measuring device according to any of the preceding claims, wherein the valve means comprise a chamber for containing a predetermined volume of powder.

5. Powder measuring device according to claim 4, wherein the volume of the chamber is adjustable.

6. Powder measuring device according to any of the preceding claims, comprising a water dispenser for dispensing water into the container, such as a bottle or a cup.

7. Powder measuring device according to claim 6, wherein the water dispenser comprises a heater for heating the water.

8. Powder measuring device according to claim 6 or 7, wherein the water is dispensed simultaneously with the dispensing of the powder.

9. Powder measuring device according to any of the preceding claims comprising vibration means for vibrating the powder container.

10. Powder measuring device according to any of the preceding claims, comprising a weighing device for weighing the measured powder and which is connected to the valve means.

11. Powder measuring device according to any of the preceding claims comprising stirring means for stirring the container, such as a bottle or cup.
